(19) Europäisches Patentamt
European Patent Office
Office européen des brevets

(11) Veröffentlichungsnummer: **0 005 226**
**B1**

(12) # EUROPÄISCHE PATENTSCHRIFT

(21) Anmeldenummer: 79101217.2

(22) Anmeldetag: 23.04.79

(51) Int. Cl.[3]: C 07 C 125/06

(54) **Verfahren zur Herstellung von Urethanen**

(30) Priorität: 05.05.78 DE 2819826

(43) Veröffentlichungstag der Anmeldung: 14.11.79 Patentblatt 79/23

(45) Bekanntmachung des Hinweises auf die Patenterteilung: 12.11.80 Patentblatt 80/23

(84) Benannte Vertragsstaaten: BE DE FR GB IT NL

(56) Entgegenhaltungen: DE - B - 1 568 044

(73) Patentinhaber: BAYER AG
ZENTRALBEREICH PATENTE
MARKEN UND LIZENZEN
D — 5090 LEVERKUSEN 1
BAYERWERK (DE)

(72) Erfinder: Becker, Robert, Dr.
Fichtestrasse 2a
D — 5090 Leverkusen (DE)
Grolig, Johann, Dr.
Heinrich-Lübke-Strasse 22
D — 5090 Leverkusen (DE)
Rasp, Christian, Dr.
Wolfskaul 10
D — 5000 Koeln 80 (DE)
Scharfe, Gerhard, Dr.
Berta-von-Suttner-Strasse 69
D - 5090 Leverkusen (DE)

EP 0 005 226 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

# Verfahren zur Herstellung von Urethanen

Die vorliegende Erfindung betrifft ein verbessertes Verfahren zur Herstellung von Urethanen (Carbamidsäureestern) durch Umsetzung organischer Nitroverbindungen mit Kohlenmonoxid und mindestens eine Hydroxygruppe enthaltenden organischen Verbindungen in Gegenwart eines wenigstens teilweise homogen gelösten Katalysatorsystems.

Organische Isocyanate werden großtechnisch im allgemeinen durch Umsetzung der entsprechenden Amine mit Phosgen hergestellt. Wegen der Giftigkeit des Phosgens ist man seit geraumer Zeit bestrebt, einen großtechnisch gangbaren Syntheseweg zu organischen Isocyanaten aufzufinden, bei welchem sich die Verwendung des Phosgens erübrigt. Ein derartiger Syntheseweg besteht in der Umsetzung von organischen Nitroverbindungen mit Kohlenmonoxid und organischen Hydroxylverbindungen zu den entsprechenden Urethanen und deren anschließende Spaltung in Isocyanat und Hydroxylgruppen aufweisende Verbindungen, wobei vor der Spaltung auch eine Modifizierung des als Zwischenprodukt erhaltenen Urethans denkbar ist. So ist es beispielsweise möglich, das aus Nitrobenzol, Kohlenmonoxid und Äthanol zugängliche Phenylurethan zunächst mit Formaldehyd zum Bisurethan des 4,4'-Diisocyanatodiphenylmethans umzusetzen, um das so erhaltene Zwischenprodukt unter Abspaltung des Äthanols in 4,4'Diisocyanatodiphenylmethan zu überführen.

Die Spaltung von Urethanen in die entsprechenden Isocyanate und Hydroxylgruppen aufweisenden Verbindungen ist beispielsweise in der DE—OS 2 421 503 bzw. in den in dieser Literaturstelle abgehandelten Vorveröffentlichungen beschrieben.

Für die Herstellung der Urethane sind in der Patent-literatur im wesentlichen zwei Katalysatortypen beschrieben. So wird beispielsweise in den DE—OSen 2 343 826, 2 614 101 und 2 623 694 die Umsetzung von organischen Nitroverbindungen mit Kohlenmonoxid und Alkoholen zu Urethanen in Gegenwart von Selen oder Selenverbindungen beschrieben. Man erhält dabei sowohl mit Mono- als auch mit Dinitroverbindungen gute Urethan-Ausbeuten. Die Selenverbindungen, insbesondere die während der Reaktion intermediär entstehenden Organoselenverbindungen und Selenwasserstoff, sind außerordentlich giftig und müssen bei der Aufarbeitung quantitativ, z.B. durch chemische Reaktion, entfernt werden, wodurch eine aufwendige chemische Aufarbeitungsstufe resultiert, welche die Wirtschaftlichkeit des Verfahrens in Frage stellt.

In den DT—OS 1 568 044 und 2 603 574 werden als Katalysatoren Edelmetalle, insbesondere Palladium, in Gegenwart von Lewissäuren beansprucht. Als besonders wirksame Lewissäure wird wasserfreies Eisen(III)-chlorid angegeben. Man erhält mit diesen Katalysatoren zwar gute Urethan-Ausbeuten, bezogen auf die eingesetzte Nitroverbindung. In Bezug auf die eingesetzte Hydroxyverbindung sind die Ausbeuten jedoch unbefriedigend. So erhält man bei Verwendung von Äthanol als Hydroxykomponente hohe Anteile von Diäthyläther, dessen Bildung durch die sauren Eigenschaften der Lewissäure verursacht werden. Gleichzeitig beobachtet man bei Anwendung dieser Edelmetall/Lewissäure-Katalysatoren Korrosion der als Reaktionsbehälter eingesetzten Edelstahlautoklaven. Durch Zusatz organischer Basen, wie beispielsweise Pyridin (DE—OS 2 603 574) kann die Korrosion zwar weitgehend zurückgedrangt werden, die Ätherbildung ist jedoch in Gegenwart dieser Katalysatorsysteme noch untragbar hoch. Ein weiterer Nachteil dieser Katalysatorsysteme liegt in ihrer schlechten Rückführbarkeit, da die angewandten Lewissäuren in Gegenwart der eingesetzten Hydroxyverbindungen nicht ausreichend stabil sind.

Es wurde nun überraschend gefunden, daß die Umsetzung von organischen Nitroverbindungen mit Kohlenmonoxid und mindestens eine Hydroxygruppe enthaltenden organischen Verbindungen zu Urethanen in der flüssigen Phase bei erhöhter Temperatur und erhöhtem Druck in Gegenwart von Palladium und/oder Palladiumverbindungen, einer Übergangsmetallverbindung und gegebenenfalls tertiären Aminen, besonders selektiv, sowohl in bezug auf die eingesetzte organische Nitroverbindung, als auch in bezug auf die organische Hydroxyverbindung durchgeführt werden kann, wenn man als Übergangsmetallverbindung Eisenoxychlorid oder ein Eisenoxychlorid enthaltendes Gemisch von Eisenverbindungen verwendet.

Gegenstand der vorliegenden Erfindung ist somit ein Verfahren zur Herstellung von Urethanen durch Umsetzung organischer Nitroverbindungen mit Kohlenmonoxid und mind. eine Hydroxylgruppe enthaltenden organischen Verbindungen in der flüssigen Phase bei erhöhter Temperature und erhöhtem Druck in Gegenwart von Palladium und/oder Palladium-Verbindungen und einer Übergangsmetallverbindung als Katalysator bzw. Kokatalysator, dadurch gekennzeichnet, daß man als Übergangsmetallverbindung Eisenoxychlorid oder ein Eisenoxychlorid enthaltendes Gemisch von Eisenverbindungen verwendet.

Die Herstellung des erfindungsgemäß einzusetzenden Eisenoxychlorids, bzw. der Eisenoxychlorid enthaltenden Gemische kann auf verschiedene Weise erfolgen. So wird Eisenoxychlorid beispielsweise erhalten, wen man beispielsweise Eisen(III)-oxid mit trockenem Chlorwasserstoff bei Temperaturen von 230—290°C behandelt (Z. anorgan. Chemie, Bd. 260, 292) wobei die Reaktion nach folgender Gleichung verläuft:

$$Fe_2O_3 + 2\ HCl = 2\ FeOCl + H_2O$$

Anstelle von Chlorwasserstoff können auch Chlorwasserstoff abspaltende Verbindungen, z.B. die Salze tertiärer Amine, wie beispielsweise Pyridiniumchlorid, eingesetzt werden.

Eine weitere Darstellungsmethode (Bull. Soc. franc. Mineral. 58,6 (1935)) besteht in der Umsetzung von Eisen(III)-oxid mit Eisen(III)-chlorid bei erhöhter Temperatur nach folgender Reaktionsgleichung:

$$Fe_2O_3 + FeCl_3 = 3\ FeOCl$$

Weiterhin erhält man Eisenoxychlorid durch Hydrolyse von Eisen(III)-chlorid in der Gasphase (Gmelins Handb. 8, Aufl. Eisen, Teil B, 318—319) oder in der flüssigen Phase beim Erhitzen auf 270—330°C im Bombenrohr (N. Jahrb. Min. Beilagebd. 52, 334 (1925)), wobei folgende Reaktionsgleichung angenommen wird:

$$FeCl_3 + H_2O = FeOCl + 2\ HCl.$$

Eine besonders vorteilhafte Darstellungsmethode ist die thermische Zersetzung von Eisenchloridhydraten im Temperaturbereich von 190°C bis 300°C bei Normaldruck (Z. anorgan. Chmie, Bd. 260, 286), die beispielsweise durch folgende Reaktionsgleichung formuliert werden kann:

$$FeCl_3{\cdot}xH_2O = FeOCl + 2\ HCl + (x—1)H_2O.$$

Je nach Temperatur des Eisenoxychlorid-Herstellung können die Präparate geringe bis größere Mengen von Zersetzungsprodukten enthalten, die die Aktivität des Eisenoxychlorids bei der Urethan-Synthese, insbesondere bei wiederholter Rückführung des Katalysatorsystems, verringern können. Das Eisenoxychlorid muß beim erfindungsgemäßen Verfahren nicht in chemisch reiner Form eingesetzt werden. Es ist durchaus möglich, die bei der technischen Herstellung des Eisenoxychlorids anfallenden Gemische von Eisenoxychlorid mit anderen nicht identifizierten Eisenverbindungen, insbesondere Eisenoxiden, einzusetzen. Bei den in diesen Gemischen neben dem Eisenoxychlorid vorliegenden Verbindungen handelt es sich um katalytisch weitgehend inerte Substanzen, deren Natur für die Durchführbarkeit des erfindungsgemäßen Verfahrens weitgehend ohne Bedeutung ist. Falls auf den Einsatz von reinem Eisenoxychlorid verzichtet wird, sollten zweckmäßigerweise Gemische eingesetzt werden, welche mind. 10, vorzugsweise mind. 50 Gew.-% an Eisenoxychlorid enthalten. Gut geeignet ist auch ein gemäß erster obengenannter Gleichung bei 230—290°C mit gasförmigem Chlorwasserstoff an der Oberfläche teilweise in Eisenoxychlorid überführtes Eisen(III)-oxid. So entsteht beispielsweise bei der Einwirkung von gasförmigem Chlorwasserstoff im genannten Temperaturbereich auf pulverförmiges Eisen(III)-oxid einer mittleren Körnung von ca. 0,001 bis 0,1 mm an der Oberfläche des Eisen(III)-oxid-Korns Eisenoxychlorid. Im Falle der Verwendung von derartigem, an der Kornoberfläche Eisenoxychlorid aufweisendem Eisen(III)-oxid als Kokatalysator beim erfindungsgemäßen Verfahren ist bemerkenswert, daß bereits Chargen mit nur 10 Gew.-% Eisenoxychlorid, bezogen auf die Summe Eisenoxychlorid + Eisen(III)-oxid eine quantitative Umwandlung der Nitroverbindung und hohe Selektivitäten ermöglichen. Das Eisenoxychlorid bzw. die Eisenoxychlorid enthaltenden Gemische werden beim erfindungsgemäßen Verfahren im allgemeinen in solchen Mengen eingesetzt, die einem Gehalt an Eisenoxychlorid im Reaktionsgemisch inkl. ggf. mitverwendeter Lösungsmittel von 0.1—20 Gew.-%, vorzugsweise 1—5 Gew.-% entsprechen.

Die Wirkungsweise des Eisenoxychlorids ist im einzelnen nicht genau bekannt. Sehr wahrscheinlich spielen nicht genau identifizierbare Reduktions- Oxidations-Reaktionen eine Rolle, während die Säure-Base-Reaktionen, die im Falle der Lewis-Säuren enthaltenden Katalysatorensysteme gemäß dem Stand der Technik offensichtlich wesentlichsind, keine Bedeutung haben, da das im organischem Medium schwerlösliche Eisenoxychlorid keinerlei saure Eigenschaften im Sinne einer Lewis-Säure aufweist. Nach beendeter erfindungsgemäßer Umsetzung wiedergewonnene Palladium und/oder Palladium-Verbindungen, sowie Eisen(II)-Verbindungen, insbesondere Eisen(II)-oxid enthaltende Katalysatoren können erforderlichenfalls durch Oxydation, beispielsweise mittels molekularem Sauerstoff (Luft) und Überführung der dabei entstehenden Eisen(III)-verbindungen bzw. insbesondere des Eisen(III)-oxids in Eisenoxychlorid reaktiviert werden.

Die wesentliche Katalysatorenkomponente sind Palladium-salze der nachstehend beispielhaft genannten Art, die vorzugsweise dem Reaktionsgemisch als solche zugegeben werden. Auch metallisches Palladium kann dem Reaktionsgemisch zugegeben werden, da durch das Eisenoxychlorid eine Oxydation des metallischen Palladiums in Palladium(II)-Verbindungen stattfindet. Auch die Mitverwendung eines inerten Trägers, beispielsweise eines Aluminium-oxid-Trägers für das Palladium ist denkbar.

Besonders vorteilhaft wird Palladium als im Reaktionsgemisch lösliche Verbindung zugegeben. Als Verbindungen sind beispielsweise Palladiumchlorid, Palladiumbromid, Palladiumjodid, Natriumtetrachloropalladat, Kaliumtetrachloropalladat, Natriumtetrabromopalladat, Natriumtetrajodopalladat, Kaliumtetrajodopalladat, Palladiumacetat, Palladiumacetylacetonat u. ä. lösliche Palladiumverbindungen geeignet. Ein besonders bevorzugtes Palladiumsalz ist Palladiumchlorid. Palladium oder die Palladiumverbindungen werden bevorzugt in Konzentrationen, bez. auf das Reaktionsgemisch, inkl. ggf.

mitverwendetem Lösungsmittel von 0,0001 bis 0,1 Gew.-%, insbesondere von 0,001 bis 0,01 Gew.-%, berechnet als metallisches Palladium, zugegeben. Bei niedrigeren Palladium-Konzentrationen wird die Reaktionsgeschwindigkeit zu gering. Höhere Palladium-Konzentrationen sind zwar möglich, jedoch wegen der möglichen Edelmetallverluste unwirtschaftlich, zumal eine weitere Steigerung der Urethanausbeuten nicht mehr erfolgt. Es ist gerade einer der wesentlichen Vorteile des erfindungsgemäßen Verfahrens, daß es die Herstellung der Urethane in ausgezeichneten Ausbeuten bei gleichzeitiger Verwendung von nur äußerst geringen Mengen an Palladium-Verbindungen gestattet.

Gemäß einer besonderen Ausführungsform des erfindungsgemäßen Verfahrens werden als weitere Katalysatoren-Komponente Basen, vorzugsweise tertiäre Amine, mitverwendet. Diese Mitverwendung von tertiären Aminen erhöht die Selektivität bezüglich möglicher unerwünschter Nebenreaktionen der als Reaktionspartner eingesetzten organischen Hydroxy-Verbindungen.

Geeignete organische Basen sind insbesondere tert. Amine des Molekulargewichtsbereiches 59—10000 vorzugsweise 59—300. Sowohl aliphatische als auch cycloaliphatische, aromatische, araliphatische oder heterocyclische tert. Amine sind geeignet. Ebenfalls geeignet sind derartige tert. Amine, welche unter den Reaktionsbedingungen inerte Substituenten, wie beispielsweise Halogen-, Alkenyl-, Cyano-, Aldehyd-, Alkoxy-, Phenoxy-, Thioalkoxy-, Thiophenoxy-, Carbamyl-, Carboalkoxy- und /oder Thio/carbamyl-Substituenten aufweisen. Beispiele geeigneter tertiärer Amine sind Trimethylamin, Triäthylamin, Tripropylamin, Tributylamin u.ä., cycloaliphatische tertiäre Amine, wie N,N,-Dimethylcyclohexylamin, N,N-Diäthylcyclohexylamin, 1,4-Diazabicyclo(2,2,2)octan u.ä.; aromatische tertiäre Amine wie N,N-dimethylanilin, N,N-Diäthylanilin, sowie heteroaromatische tertiäre Amine wie Pyridin, Chinolin, Isochinolin, Chinaldin, Lepidin, pyrolysiertes Polyacrylnitril oder Polyvinylpyridin.

Die tertiären Amine werden bevorzugt in Konzentrationen von 0,1 bis 10 Gew.-%, insbesondere 0,2 bis 5 Gew.-%, bez. auf das Reaktionsgemisch, zugesetzt.

Ausgangsverbindungen für das erfindungsgemäßbe Verfahren sind beliebige organische Nitroverbindungen, d.h. beliebige Nitrogruppen aufweisende, ansonsten unter den Bedingungen des erfindungsgemäßen Verfahrens inerte organische Verbindungen mit mindestens einer aliphatisch, cycloaliphatisch und/oder aromatisch gebundenen Nitrogruppe, eines im allgemeinen zwischen 61 und 400, vorzugsweise 123 und 262 liegenden Molekulargewichts, sowie beliebige, mindestens eine Hydroxygruppe enthaltende organische Verbindungen, beispielsweise substituierte oder unsubstituierte, aliphatische, cycloaliphatische und/oder aromatische Mono- oder Polyhydroxyverbindungen, eines im allgemeinen zwischen 32 und 228, vorzugsweise 32 und 102 liegenden Molekulargewichts.

Beispielsweise können folgende aromatische Nitroverbindungen eingesetzt werden: Nitrobenzol, o-Dinitrobenzol, m-Dinitrobenzol, p-Dinitrobenzol, o-Chlor-nitrobenzol, m-Chlor-nitrobenzol, o-Chlornitrobenzol, o-Nitrotoluol, m-Nitrotoluol, p-Nitrotoluol, 2,3-Dinitrotoluol, 2,4-Dinitrotoluol, 2,5-Dinitrotoluol, 2,6-Dinitrotoluol, 3,4-Dinitrotoluol, 3-Nitro-o-xylol, 4-Nitro-o-xylol, 2-Nitro-m-xylol, 4-Nitro-m-xylol, 5-Nitro-m-xylol, Nitro-p-xylol, 3,4-Dinitro-o-xylol, 3,5-Dinitro-o-xylol, 3,6-Dinitro-o-xylol, 4,5-Dinitro-o-xylol, 2,4-Dinitro-m-xylol, 2,5-Dinitro-m-xylol, 4,5-Dinitro-m-xylol, 4,6-Dinitro-m-xylol, 2,3-Dinitro-p-xylol, 2,6-Dinitro-p-xylol, 1-Nitronaphthalin, 2-Nitronaphthalin, Dinitro-naphthaline, Nitroanthracene, Nitrodiphenyle, Bis-(nitrophenyl)-methane, Bis-(nitrophenyl)-thioäther, Bis-(nitrophenyl)-sulfone, Nitrodiphenoxyalkane, Nitrophenothiazine.

Als cycloaliphatische Nitroverbindungen seien genannt: Nitrocyclobutan, Nitrocyclopentan, Nitrocyclohexan, 1,2-Dinitrocyclohexan, 1,3-Dinitrocyclohexan, 1,4-Dinitrocyclohexan, Bis-(nitrocyclohexyl)-methane.

Beispielhaft für die Gruppe der Nitroalkane seien genannt: Nitromethan, Nitroäthan, 1-Nitropropan, 2-Nitropropan, Nitrobutane, Nitropentane, Nitrohexane, Nitrodecane, Nitrocetane, 1,2-Dinitroäthan, 1,2-Dinitropropan, 1,3-Dinitropropan, Dinitrobutane, Dinitropentane, Dinitrohexane, Dinitrodecane, Phenylnitromethan, Bis-(nitromethyl)-cyclohexane, Bis-(nitromethyl)-benzole, $\omega$-Nitrocarbonsäurenitrile.

Besonders bevorzugte Nitroverbindungen für das erfindungsgemäße Verfahren sind aromatische Nitroverbindungen wie insbesondere Nitrobenzol, 1,3-Dinitrobenzol, 2,4-Dinitrotoluol, 2,6-Dinitrotoluol, Dinitronaphthaline wie z.B. 1,5-Dinitronaphthalin oder 2,4'- bzw. 4,4'-Dinitrodiphenylmethan.

Zu den erfindungsgemäß geeigneten Hydroxygruppen enthaltenden organischen Verbindungen zählen einwertige Alkohole, mehrwertige Alkohole, einwertige Phenole und mehrwertige Phenole.

Die alkohole umfassen lineare oder verzweigte Alkanole, Cycloalkanole, Alkenole, Cycloalkenole, Aralkylakohole und ähnliches, jeder ein- oder mehrwertig. Diese Alkohole können einen Substituenten enthalten, der Sauerstoff, Stickstoff, Schwefel oder ein Halogenatom enthält, beispielsweise eine Halogen-, Sulfoxid-, Sulfon-, Amin-, Amid-, Carbonyl- oder Carbonsäureestergruppe. Beispielhaft seien folgende einwertigen Alkohole genannt: Methylalkohol, Äthylalkohol, Propanol, Isopropanol, Butanol, Pentanol, Hexanol, Cyclohexanol, Benzylalkohol, Geeignete mehrwertige Alkohole sind beispielsweise: Äthylenglykol, Diäthylenglykol, Propylenglykol, Dipropylenglykol, Glycerin, Hexantriol und ähnliche sowie höher funktionelle Polyole. Bevorzugt werden einwertige aliphatische Alkohole mit 1—6 Kohlenstoffatomen und besonders bevorzugt Äthylalkohol eingesetzt.

Zu den erfindungsgemäß geeigneten Phenolen zählen beispielsweise Phenol, Chlorphenole, Kresole, Äthylphenole, Propylphenole, Butylphenole oder höhere Alkylphenole, Brenzcatechin, Resorcin, 4,4'-Dihydroxydiphenylmethan, Bisphenol-A, Anthranol, Phenanthrol, Pyrogallol, Floroglucin u.ä.

Die organischen Hydroxy-Verbindungen werden bei der Durchführung des erfindungsgemäßen Verfahrens im allgemeinen in solchen Mengen eingesetzt, daß bei Verwendung von Mononitroverbindungen als Ausgangsmaterial ein Äquivalentverhältnis zwischen Nitrogruppen und Hydroxylgruppen von 1;0,5 bis 1:100, vorzugsweise 1:1 bis 1:100 und bei Verwendung von Dinitroverbindungen ein Äquivalentverhältnis zwischen Nitrogruppen und Hydroxylgruppen von 1:1 bis 1:100 vorliegt.

Besonders bevorzugt werden die bevorzugten Alkohole im Überschuß eingesetzt, wobei der nicht umgesetzte Überschuß als Reaktionsmedium dient.

Das Kohlenmonoxid wird im allgemeinen in einer Menge eingesetzt, die 1 bis 30 Mol Kohlenmonoxid pro Mol an umzusetzenden Nitrogruppen entspricht, wobei im allgemeinen das Kohlenmonoxid in den vorzugsweise beim erfindungsgemäßen Verfahren eingesetzten Druckreaktor eingepreßt wird.

Die erfindungsgemäße Umsetzung kann in Gegenwart oder in Abwesenheit eines Lösungsmittels durchgeführt werden. Im allgemeinen dient die vorzugsweise im Überschuß eingesetzte organische Hydroxylverbindung als Lösungsmittel. Die Mitverwendung inerter Lösungsmittel, die bis zu 80 Gew.-% gesamten Reaktionsansatzes ausmachen können, ist jedoch auch möglich. Die Menge des Lösungsmittels muß, gleichgültig ob es sich um im Überschuß eingesetzte Hydroxylverbindung oder um inertes Lösungsmittel handelt, so bemessen sein, daß die Reaktionswärme der exothermen Urethanbildung ohne unzulässige Temperaturerhöhung abgeführt werden kann. Im allgemeinen wird daher das erfindungsgemäße Verfahren unter Verwendung einer Konzentration an Nitroverbindungen von 5—30 Gew.-%, vorzugsweise 5—20 Gew.-%, bezogen auf das Gesamtreaktionsgemisch inklusive dem Lösungsmittel durchgeführt.

Brauchbare Lösungsmittel sind gegen die Reaktionskomponenten und das Katalysatorsystem inerte Lösungsmittel, wie beispielsweise aromatische, cycloaliphatische und aliphatische Kohlenwasserstoffe, die gegebenenfalls durch Halogen substituiert sein können, wie Benzol, Toluol, Xylol, Chlorbenzol, Dichlorbenzol, Trichlorbenzol, Chlornaphthalin, Cyclohexan, Methylcyclohexan, Chlorcyclohexan, methylenchlorid, Tetrachlorkohlenstoff, Tetrachloräthan, Trichlor-trifluoräthan u.ä. Verbindungen.

Die Reaktionstemperatur liegt im allgemeinen zwischen 100°C und etwa 300°C, insbesondere zwischen 150°C und 250°C und besonders vorteilhaft im Bereich von 170°C bis 200°C. Der Druck muß so bemessen sein, daß stets das Vorliegen einer flüssigen Phase gewährleistet ist und liegt im allgemeinen im Bereich von 5 bis 500 bar, besonders vorteilhaft im Bereich von 50 bis 300 bar bei Reaktionstemperatur. Je nach eingesetzter Nitroverbindung bzw. Hydroxyverbindung beträgt die für quantitativem Umsatz benötigte Reaktionszeit zwischen wenigen Minuten und mehreren Stunden.

Die Umsetzung der Nitroverbindungen mit den Hydroxyverbindungen und Kohlenmonoxid zu Urethanen kann diskontinuierlich oder kontinuierlich durchgeführt werden.

Die diskontinuierliche Umsetzung kann im Hochdruckautoklaven mit geringen Mengen homogen gelöstem Palladiumsalz in Gegenwart eines komplexierenden tertiären Amins, wie beispielsweise Pyridin, und einem ausreichenden Überschuß Eisenoxychlorid, bzw. Eisenoxychlorid enthaltenden Gemisches von Eisenverbindungen—das Eisenoxychlorid wird im allgemeinen, bezogen auf das Palladium bzw. die Palladiumverbindungen, in einem molaren Überschluß eingesetzt—durchgeführt werden. Das bei tiefen Temperaturen im Reaktionsmedium nur wenig lösliche Eisenoxychlorid wird in Form eines feinen Pulvers zugegeben, wodurch die bei höherer Temperatur erfolgende Auflösung beschleunigt wird. Die Verteilung des teilweise nicht gelösten überschüssigen Eisenoxychlorids und unlöslicher Bestandteile des Kokatalysatorgemisches kann durch kräftiges Rühren oder durch Umpumpen des Reaktionsgemisches erfolgen. Die exotherme Reaktionswärme kann durch intern eingebaute Kühlaggregate oder im Falle des Umpumpens auch über einen externen Wärmeaustauscher abgeführt werden. Die Aufarbeitung und Katalysatorrückführung kann je nach Löslichkeit des erzeugten Urethans im Reaktionsgemisch auf verschiedene Weise erfolgen. Bei leichtlöslichen Urethanen kann beispielsweise nach beendeter Reaktion die Hauptmenge des bei tiefen Temperaturen schwerlöslichen Eisenoxychlorids samt dem größten Teil des adsorbierten Palladiums und der organischen Base vom Reaktionsprodukt abgetrennt werden, beispielsweise durch Filtration oder Zentrifugieren, und in eine neue Umsetzung von Nitroverbindungen, Hydroxyverbindungen und Kohlenmonoxid weider zurückgeführt werden. Das flüssige Reaktionsgemisch kann auf übliche Weise, z.B. durch fraktionierte Destillation, in Lösungsmittel, die reinen Urethane und gegebenenfalls kleine Mengen von Nebenprodukten aufgetrennt werden, wobei diese Trennung diskontinuierlich oder kontinuierlich erfolgen kann. Im Destillationsrückstand sind kleine Mengen des im Reaktionsgemisch gelösten Eisenoxychlorids und gegebenenfalls dessen Zusetzungsprodukte und/oder Spuren von Palladium und/oder Palladiumverbindungen enthalten, die direkt wieder in die Umsetzung zurückgeführt werden können oder ganz oder teilweise unter den Bedingungen der Eisenoxychloridbildung einer thermischen Behandlung, gegebenenfalls mit Luft bzw. chemischen Oxidationsmitteln, beispielsweise einer Nitroverbindung der als Ausgangsmaterial einzusetzenden Art, gegebenenfalls in Gegenwart von Lösungsmitteln der oben beispielhaft genannten Art, Wasser, Chlorwasserstoff und-oder Chloriden wie z.B. Pyridiniumchlorid oder Chinaldiniumchlorid unterworfen werden können, um sodann als für die selektive Urethanbildung aktive Spezies ebenfalls in die Reaktion zurückgeführt werden.

Im Falle von im Lösungsmittel bzw. überschüssiger Hydroxyverbindung schwer löslichen Urethanen kann die Aufarbeitung des Reaktionsgemisches in abgeänderter Weise erfolgen. Beispielsweise wird nach Entspannung unter Druck und höherer Temperatur, bei welchen die Urethane noch gelöst sind, jedoch das Katalysatorsystem Palladium/Eisenoxychlorid weitgehend ausfällt, die Hauptmenge Katalysator abfiltriert oder abzentrifugiert und dann durch Temperaturerniedrigung das schwerlösliche Urethan, gegebenenfalls zusammen mit geringen Mengen schwerlöslicher Nebenprodukte und restlichem Katalysator, auskristallisiert. Die Mutterlauge, die außer Lösungsmittel, bzw. der als Lösungsmittel angewandten überschüssigen organischen Hydroxyverbindung, noch geringe Mengen Nebenprodukte, gelöstes Urethan und gegebenenfalls gelöstes Eisenoxychlorid oder daraus entstandene lösliche Eisenverbindungen enthält, kann direkt oder nach vorheriger Entfernung leichtsiedender Nebenprodukte, beispielsweise durch Destillation, in die Umsetzung der Nitroverbindungen mit den Hydroxyverbindungen und Kohlenmonoxid zurückgeführt werden, wobei die dem vorherigen Umsatz entsprechende Menge Nitroverbindung und Hydroxyverbindung ergänzt wird. Höhersiedende Hebenprodukte, welche nicht durch Kristallisation entfernt werden, können durch destillative Aufarbeitung eines aliquoten Teiles der Mutterlauge als Destillationrückstand kontinuierlich aus dem Rückführstrom entfernt werden. Das ausgefallene Rohurethan kann beispielsweise durch Kristallisation aus einem das Urethan bei höheren Temperaturen lösenden, die Nebenprodukte and die Katalysatorreste jedoch nicht lösenden Lösungsmittel wie beispielsweise Isooktan, Benzol, Toluol, Xylol, Chlorbenzol, Dichlorbenzol rekristallisiert werden. Die bei erhöhter Temperatur unlöslichen Rückstände können durch Oxidation, wie oben beschrieben, in Eisenoxychlorid und ein aus den organischen Verunreinigungen resultierendes Abgas, das im wesentlichen aus Kohlendioxid, Sauerstoff, Stickstoff und gegebenenfalls leicht flüchtigen organischen Verunreinigungen besteht, umgewandelt werden. Das Abgas kann je nach Zusammensetzung direkt in die Atmosphäre abgelassen werden oder zusätzlich einer katalytischen Nachverbrennung zugeführt werden, in welcher restliche Verunreinigungen oxidativ entfernt werden. Das aus dem Rückstand erhaltene aktive Eisenoxychlorid, das gegebenenfalls noch geringe Mengen Palladium und/oder Palladiumverbindung enthalten kann, wird wieder in die Umsetzung der Nitroverbindungen mit Hydroxyverbindungen und Kohlenmonoxid zurückgeführt.

Die kontinuierliche Umsetzung kann in einer Kesselkaskade, einem Rohrbündelreaktor, mehrerer hintereinander geschalteten Schlaufenreaktoren, in einem oder einer Serie hintereinander geschalteten adiabaten Reaktionsrohren durchgeführt werden. Die Wärmeabführung erfolgt beispielsweise entweder intern durch eingebaute Kühlaggregate, extern über einen Rohrbündelwärmetauscher oder adiabatisch über die Wärmekapazität des Reaktionsgemisches mit nachfolgender Abkühlung in externen Kühlaggregaten.

Die weitere Aufarbeitung kann wie oben beschrieben erfolgen, wobei sowohl eine kontinuierliche als auch eine diskontinuierliche Arbeitsweise angewandt werden kann.

Im Falle der bevorzugten Verwendung der erfindungsgemäßen Verfahrensprodukte als Zwischenprodukte zur Herstellung der entsprechenden Isocyanate ist ihre Reindarstellung oft überflüssig. Zur weiteren Verarbeitung kann es vielmehr ausreichend sein, das nach Abfiltrieren des Katalysators und gegebenenfalls Abdestillieren des Lösungsmittels anfallende Rohprodukte in die Weiterverarbeitung einzusetzen.

Das Verfahren wird durch die folgenden Beispiele illistriert, ohne damit die Erfindung auf die in den Beispielen gegebenen Bedingungen einzuschränken.

### Beispiel 1

A. Herstellung des Eisenoxychlorid-Katalysators (Z. anorg. Chem. 260, 288 (1949)):

In einem Rundkolben mit absteigendem Kühler werden 200 g Eisen(III)-chlorid-Hydrat ($FeCl_3 . 6\,H_2O$) in ein Ölbad von 250°C eingetaucht und 80 Minuten darin belassen. Das Hydrat beginnt bei etwa 122°C zu sieden. Mit abnehmendem Wassergehalt steigt die Temperatur schnell an. Gleichzeitig wächst die neben Wasser abgegebene Chlorwasserstoffmenge. Man erhält ein braunes mikrokristallines Produkt mit der fast stöchiometrischen Zusammensetzung FeOCl nach folgender Reaktionsgleichung:

$$FeCl_3 . 6\,H_2O \rightarrow FeOCl + 2\,HCl + 5\,H_2O$$

B. Umsetzung von Nitrobenzol, Äthanol und Kohlenmonoxid zu Phenylurethan:

In einen 0,7 1 Autoklaven aus rostfreiem Stahl wurden eine Lösung von 25 g Nitrobenzol in 225 g Äthanol zusammen mit 0,1 g Palladiumchlorid (0,04 Gew.-%), 3,0 g nach A hergestelltes Eisenoxychlorid (1,1 Gew.-%) und 15,3 g Pyridin (5,7 Gew.-%) eingebracht und 120 bar Kohlenmonoxid bei Raumtemperatur aufgepreßt. Der Autoklaveninhalt wurde auf 180°C aufgeheizt, wobei sich ein maximaler Druck von 190 bar einstellte, und 2 h bei dieser Temperatur belassen. Der Druck betrug nun 165 bar. Nun wurde auf Raumtemperatur abgekühlt, das Reaktionsgas über eine Kühlfalle entspannt und der flüssige Autoklaveninhalt zusammen mit der in der Kühlfalle abgeschiedenen Flüssigkeit gaschromatografisch analysiert. Der Nitrobenzol-Umsatz betrug 100%. Die Selektivität an Phenylurethan (Athyl-N-phenylcarbamidsäureester), bezogen auf Nitrobenzol, lag ebenfalls bei 100%. Die Bildung von Diäthyläther war nicht nachzuweisen.

Beispiel 2

Es wurde wie im Beispiel 1 gearbeitet, jedoch anstelle des Palladiumchlorids die gleiche Menge Palladiumjodid eingesetzt. Der gaschromatografisch ermittelte Nitrobenzol-Umsatz betrug wiederum 100%, die Selektivitäten an Phenylurethan betrugen 79 Mol-%, bezogen auf Nitrobenzol, und 85 Mol-%, bezogen auf umgesetztes Äthanol. Diäthyläther konnte gaschromatografisch nicht ermittelt werden.

Beispiel 3

Es wurde wie im Beispiel 1 gearbeitet, jedoch die Konzentration des Palladiumchlorids auf 0,002 Gew.-%, bezogen auf Gesamtgemisch, erniedrigt, die Konzentration des Eisenoxychlorids auf 3,6 Gew.-% erhöht. Man erhielt bei einem Umsatz des Nitrobenzols von 48%, Phenylurethan-Selektivitäten von 100%, bezogen auf umgesetztes Nitrobenzol, und von 89%, bezogen auf umgesetztes Äthanol. Die Diäthyläther-Bildung betrug 4 Mol-%, bezogen auf umgesetztes Äthanol.

Beispiel 4

Das Beispiel erläutert den Einfluß der Konzentration an tertiärem Amin. Die Palladium-Konzentration betrug 0,002 Gew.-%, die Eisenoxychlorid-Konzentration 3,8 Gew.-%. Als tertiäres Amin wurde Pyridin eingesetzt. Die sontigen Bedingungen entsprachen dem Beispiel 1.

| Pyridin-Konz. Gew.—% | Nitrobenzol-Umsatz % | Selektivität (Mol—%) | | |
|---|---|---|---|---|
| | | Selektivitäten Phenylurethan benzogen auf | | Diäthyläther bezogen auf Äthanol |
| | | Nitrobenzol | Äthanol | |
| 0 | 71 | 82 | 66 | 27 |
| 0,4 | 100 | 89 | 86 | 7 |
| 0,8 | 100 | 90 | 89 | 4 |
| 1,1 | 100 | 92 | 89 | 4 |
| 1,9 | 100 | 95 | 93 | 4 |
| 5,8 | 100 | 100 | 89 | 4 |

Die Tabelle zeigt den Einfluß der Amin-Konzentration. Bereits 0,4% Pyridin verhindern weitgehend die Bildung des unerwünschten Diäthyläthers.

Beispiel 5 (Vergleichsbeispiel 1)

Als Katalysatorsystem wurde ein Gemisch von 0,002% Palladiumchlorid, 3,5% Eisen(III)-chlorid und 3,3% Pyridin eingesetzt. Diese Arbeitsweise entspricht der in der DT—OS 2 603 574 beschriebenen Arbeitsweise, bei welcher Eisen(III)-chlorid als aktivierende Lewissäure zugesetzt wird. Mit diesem Katalysatorsystem wurde die Umsetzung von Nitrobenzol, Äthanol und Kohlenmonoxid zu Phenylurethan unter den im Beispiel 4 angegebenen Bedingungen durchgeführt.

Die Pyridin-Konzentration lag bei 1,8 Gew.-%, vergleichbar mit dem vorletzten Versuch des Beispiels 4. Nitrobenzol wurde quantitativ umgesetzt und die Phenylurethan-Selektivität, bezogen auf das Nitrobenzol, betrug 95 Mol-%; sie war somit ebenfalls vergleichbar mit der in Beispiel 4 angegebenen Selektivität. Dagegen betrug die Phenylurethan-Selektivität, bezogen auf umgesetztes Äthanol, nur 72,5 Mol-%, als wesentliches Nebenprodukt wurde 24 Mol-% Diäthyläther gebildet. Im Beispiel 4 mit Eisenoxychlorid als Kokatalysator betrug die Phenylurethan-Selektivität 93 Mol-%, es fielen nur 4 Mol-% des unerwünschten Nebenproduktes Diäthyläther an. Man erkennt aus diesem Vergleich die Vorteile des erfindungsgemäßen Katalysatorsystems gegenüber bekannten Katalysatoren.

Beispiel 6

Dieses Beispiel erläutert die Wirkungsweise des Eisenoxychlorid-Zusatzes bei Einsatz von Palladiummetall auf einem inerten Träger. 0,7 Gew.-% (die Gewichtsprozente beziehen sich jeweils auf Gesamtgemisch) eines Palladium-Trägerkatalysators bestehend aus 5 Gew.-% Palladium und 95

Gew.% Aluminiumoxid wurden zusammen mit 1,1 Gem.-% Eisenoxychlorid und 5,7 Gew.- Pyridin einer 4%igen Lösung von Nitrobenzol in Äthanol zugesetzt und die Umsetzung unter den Reaktionsbedingungen des Beispiels 1 durchgeführt. Bei quantitativem Nitrobenzol-Umsatz wurden 90 Mol-% Phenylurethan, bezogen auf Nitrobenzol, und 80 Mol-% bezogen auf Äthanol, erhalten, Die Diäthylätherbildung betrug nur 1 Mol-%. Ohne Zusatz des Eisenoxychlorid wurde mit dem Palladium/Aluminiumoxid-Katalysator kein Umsatz festgestellt.

Beispiel 7

Eine Lösung von 6,8 Gew.-% 2,4-Dinitrotoluol in Äthanol wurde in Gegenwart von 0,002 Gew.-% Palladiumchlorid, 3,8 Gew.-% Eisenoxychlorid und 3,8 Gew.-% Pyridin unter den Bedingungen des Beispiels 1 umgesetzt. Man ermittelte durch liquid-chromatografische Analyse eine Ausbeute von 98% d.Th. an Diäthyl-toluol-2,4-dicarbamat (Bisurethan des Toluyliden-2,4-diisocyanats). Die Bildung von Diäthyläther lag unter 1 Mol-%, bezogen auf umgesetztes Äthanol.

Beispiel 8

Es wurde wie im Beispiel 1 gearbeitet, jedoch als Kokatalysator Gemische mit verschiedenen Gehalten an Eisenoxychlorid zugesetzt. Das restliche Eisen der Gemische lag als Eisenoxyhydrat wechselnden Wassergehalt vor. Die Ergebnisse mit diesen Gemischen zeigt folgende Tabelle:

| FeOCl-Gehalt in Gemisch % vom Einsatz gemäß Beispiel 1 | Nitrobenzol-Umsatz % | Phenylurethan-Selektivität (bezogen auf umgesetztes Nitrobenzol) % |
|---|---|---|
| 0 | 0 | 0 |
| 28 | 62 | 72 |
| 59 | 100 | 92 |
| 67 | 100 | 93 |
| >75 | 100 | 99 |

Beispiel 9

Die in nachfolgendem Beispiel verwendete Kokatalysator-Charge war durch fünfstündiges Behandeln von pulverförmigem $\alpha$ Eisen(III)-oxid einer mittleren Körnung von ca. 0,002 bis 0,05 mm mit Chlorwasserstoff bei 240°C in einem beheizten Quarzglasreaktor hergestellt vorden. Die Konzentration an Eisenoxychlorid lag bei 13 Gew.-%, bezogen auf die Summe Eisen(III)-oxid + Eisenoxychlorid.

Es wurde wie im Beispiel 1 gearbeitet; als Kokatalysator wurde die genannten Eisen(III)-oxid/Eisenoxychlorid-Charge in einer menge von 3,8 Gew.-% eingesetzt. Die Konzentration des Palladiumchlorids betrug 0,002 Gew.-%.

Man erhielt bei einem Umsatz des Nitrobenzols von 100% Phenylurethan-Selektivitäten von 96% bezogen auf umgesetztes Nitrobenzol und von 87%, bezogen auf umgesetztes Äthanol.

**Patentansprüche:**

1. Verfahren zur Herstellung von Urethanen durch Umsetzung organischer Nitroverbindungen mit Kohlenmonoxid und mind. eine Hydroxylgruppe enthaltenden organischen Verbindungen in der flüssigen Phase bei erhöhter Temperatur und erhöhtem Druck in Gegenwart von Palladium und/oder Palladium-Verbindungen und einer Übergangsmetallverbindung als Katalysator bzw. Kokatalysator, dadurch gekennzeichnet, daß man als Übergangsmetallverbindung Eisenoxychlorid oder ein Eisenoxychlorid enthaltendes Gemisch von Eisenverbindungen verwendet.

2. Verfahren gemäß Anspruch 1, dadurch gekennzeichnet, daß man tertiäre Amine als weitere Katalysatorkomponente mitverwendet.

3. Verfahren nach Anspruch 1 und 2, dadurch gekennzeichnet, daß man das Eisenoxychlorid bzw. das Eisenoxychlorid enthaltende Gemisch in einer solchen menge verwendet, daß die Konzentration an Eisenoxychlorid—bezogen auf die Gesamtmenge des Reaktionsgemisches—0,1 bis 20 Gew.-% beträgt.

4. Verfahren nach Anspruch 1 bis 3, dadurch gekennzeichnet, daß man als Nitroverbindung Nitrobenzol verwendet.

5. Verfahren nach Anspruch 1 bis 3, dadurch gekennzeichnet, daß man als Nitroverbindung Dinitrotoluol verwendet.

6. Verfahren nach Anspruch 1 bis 5, dadurch gekennzeichnet, daß man als mind. 1 Hydroxygruppe enthaltende organische Verbindung einen einwertigen aliphatischen Alkohol mit 1 bis 6 Kohlenstoffatomen verwendet.

7. Verfahren nach Anspruch 1 bis 6, dadurch gekennzeichnet, daß man als mind. 1 Hydroxygruppe enthaltende organische Verbindung Äthanol verwendet.

8. Verfahren nach Anspruch 1 bis 7, dadurch gekennzeichnet, daß man die Umsetzung im Temperaturbereich zwischen 150°C und 250°C durchführt.

9. Verfahren nach Anspruch 1 bis 8, dadurch gekennzeichnet, daß man die Umsetzung im Druckbereich zwischen 5 und 500 bar durchführt.

## Claims

1. Process for the preparation of urethanes by reacting organic nitro compounds with carbon monoxide and organic compounds containing at least one hydroxyl group, in the liquid phase, at elevated temperature and under increased pressure and in the presence of palladium and/or palladium compounds and a transition metal compound, as the catalyst and co-catalyst, characterised in that iron oxychloride or a mixture of iron compounds which contains iron oxychloride is used as the transition metal compound.

2. Process according to Claim 1, characterised in that tertiary amines are also used as further catalyst components.

3. Process according to Claims 1 and 2, characterised in that the iron oxychloride or the mixture containing iron oxychloride is used in an amount such that the concentration of iron oxychloride, relative to the total amount of the reaction mixture, is 0.1 to 20% by weight.

4. Process according to Claims 1 to 3, characterised in that the nitrobenzene is used as the nitro compound.

5. Process according to Claims 1 to 3, characterised in that dinitrotoluene is used as the nitro compound.

6. Process according to Claims 1 to 5, characterised in that a monohydric aliphatic alcohol with 1 to 6 carbon atoms is used as the organic compound containing at least 1 hydroxyl group.

7. Process according to Claims 1 to 6, characterised in that ethanol is used as the organic compound containing at least 1 hydroxyl group.

8. Process according to Claims 1 to 7, characterised in that the reaction is carried out in the temperature range between 150°C and 250°C.

9. Process according to Claims 1 to 8, characterised in that the reaction is carried out in the pressure range between 5 and 500 bars.

## Revendications

1. Procédé de préparation d'uréthanes par réaction de composés nitrés organiques avec de l'oxyde de carbone et des composés organiques contenant au moins un groupe hydroxyl en phase liquide, à température élevée et sous forte pression, en présence de palladium et/ou de composés de palladium et d'un composé d'un métal de transition comme catalyseur ou co-catalyseur, caractérisé en ce que, comme composé d'un métal de transition, on utilise l'oxychlorure de fer ou un mélange de composés de fer contenant de l'oxychlorure de fer.

2. Procédé suivant la revendication 1, caractérisé en ce qu'on utilise conjointement des amines tertiaires comme composants catalytiques supplémentaires.

3. Procédé suivant l'une quelconque des revendications 1 à 2, caractérisé en ce qu'on utilise l'oxychlorure de fer ou le mélange contenant de l'oxychlorure de fer en une quantité calculée de telle sorte que la concentration en oxychlorure de fer (rapportée à la quantité totale du mélange réactionnel) soit de 0,1 à 20% en poids.

4. Procédé suivant l'une quelconque des revendications 1 à 3, caractérisé en ce que, comme composé nitré, on utilise le nitrobenzène.

5. Procédé suivant l'une quelconque des revendications 1 à 3, caractérisé en ce que, comme composé nitré, on utilise le dinitrotoluène.

6. Procédé suivant l'une quelconque des revendications 1 à 5, caractérisé en ce que, comme composé organique contenant au moins un groupe hydroxy, on utilise un alcool aliphatique monovalent content 1 à 6 atomes de carbone.

7. Procédé suivant l'une quelconque des revendications 1 à 6, caractérisé en ce que, comme composé organique contenant au moins un groupe hydroxy, on utilise l'éthanol.

8. Procédé suivant l'une quelconque des revendications 1 à 7, caractérisé en ce qu'on effectue la réaction à une température comprise entre 150 et 250°C.

9. Procédé suivant l'une quelconque des revendications 1 à 8, caractérisé en ce qu'on effectue la réaction sous une pression comprise entre 5 et 500 bars.